# EUROPEAN PATENT APPLICATION

(11) **EP 2 727 886 A1**
(43) Date of publication of application: **07.05.2014**
(21) Application number: 13191436.8
(22) Date of filing: 04.11.2013
(51) Int. Cl.: C02F 3/26, C02F 3/30, C02F 103/20

(54) **Methods for treating liquid waste with high purity oxygen**

(30) Priority: 05.11.2012 US 201213668450
(71) Applicant: AIR PRODUCTS AND CHEMICALS, INC., Allentown, PA 18195-1501 (US)
(72) Inventor: Hannay, Neil, Yeovil, Somerset BA22 9BH (GB); Boussemaere, Roel Albert, 9000 Gent (BE)
(74) Representative: Beck Greener

(57) **Abstract**

Methods for treating biowaste water, particularly liquid fractions separated from animal waste or manure, with high purity oxygen are provided to increase the dissolved oxygen (DO) content of the biowaste water and minimize stripping of volatile gases. In particular, methods of the invention comprising treating biowaste water by aerating the biowaste water with oxygen having a purity greater than 90% until the DO level of the liquid fraction is at least 2 mg/L and preferably no more than 9 mg/L.

## Description

The present invention relates to methods for treating liquid waste with oxygen. More specifically, the present invention relates to methods for oxidizing liquid manure to reduce nitrous oxide, ammonia, and hydrogen sulfide emissions.

In the past, animal manure has often been spread over land as a way to dispose of the manure while utilizing some of the beneficial nutrients contained therein. The spreading of raw manure is inefficient, however, and can lead to pollution of local aquifers. It is therefore becoming more frequent to partially or fully treat animal manure, often by separating out solids (for example by a centrifuge, sieve, or other solids removal method) to produce a relatively dry, or solid, portion and a liquid portion. Each portion is then treated or used separately depending upon individual needs. The liquid portion (which may also include liquors produced from further treatment of the solid portion) contains contaminants such as carbon- and nitrogen-containing compounds that can be treated to produce clean water, which can then be safely returned to aquifers or placed into domestic sewage systems. Carbon compounds can be removed *via* a variety of biological methods, both aerobic and anaerobic. Nitrogen compounds such as ammonia, however, are often present in high concentrations and require more specialized treatment processes.

Previous methods for treating animal manure include biological nitrification and denitrification of the liquid fraction, in which the liquid is aerated with air during the nitrification part of the process to convert ammonium to nitrite and nitrate, and anaerobic microorganisms are used in the denitrification part of the process to convert nitrite to nitrogen. Such a method is described in U.S. Patent No. 6,383,390, which is incorporated herein by reference. Both the nitrification and the denitrification processes, however, produce nitrous oxide (N₂O) as an intermediate that is released to the environment. Nitrous oxide emissions from liquid waste treatment facilities are discussed in greater detail in Kampschreur et al., "Emission of Nitrous Oxide and Nitric Oxide From a Full-Scale Single-Stage Nitritation-Annamox Reactor," Water Science & Technology 60.12 (2009), pp. 3211-3217 and Lotito et al., "Nitrous Oxide Emissions From the Oxidation Tank of a Pilot Activated Sludge Plant," Water Research 46 (2012), pp. 3563-3573. Because N₂O is an environmentally hazardous pollutant, it is desirable to minimize the formation and release of N₂O during the manure treatment process.

Other examples of prior art treatment processes include those described in U.S. Patent No. 7,468,132, which describes treating liquid waste using an activated sludge aeration system to reduce dissolved organic pollutants to carbon dioxide, bacteria, and water, and EP 1 380 555, in which a liquid waste fraction is biologically purified *via* an aerobic nitrification step and then concentrated by evaporation. Further, EP 0 558 421 describes a continuous method for treating liquid animal waste comprising a continuous succession of aeration and anoxia with recycling, in which purified liquid is evacuated after clarification, and GB Patent No. 1 455 567 describes treating a pressurized liquid stream with an oxygenating gas and introducing the mixed gas/liquid stream into a volume under turbulent conditions such that the undissolved gas forms fine bubbles that either dissolve or are consumed within the liquid. WO 2011/110905 describes a method for biological purification of ammonium-containing wastewater between 7 and 25°C in an aeration tank in which the ammonium contained in the wastewater is converted to elemental nitrogen at an oxygen concentration less than 1.0 mg/L.

Many of these and other prior art systems employ air to aerate feed wastewater. In such air-based systems, issues often occur involving stripping of volatile gases, in which dissolved gases transfer from the water to the air and are released into the atmosphere. Air systems typically run at oxygen transfer efficiencies of 10-15% of the oxygen content. This means that over 97% of the gas flow entering a treatment basin will also exit from the top of the basin. In the process, dissolved gases will be stripped. In manure treatment, the gases that may be stripped include carbon dioxide (CO₂), hydrogen sulfide (H₂S), ammonia (NH₃), and nitrous oxide (N₂O), as well as methane (CH₄) in post-anaerobically treated wastewater. Of these, hydrogen sulfide and ammonia are odorous and toxic, and nitrous oxide is stringently monitored due to its high greenhouse and ozone depleting properties (N₂O has approximately 300 times the equivalent greenhouse effect of CO₂).

Accordingly, minimizing stripping of these gases is a primary goal in manure treatment processes. Ammonia is present in feed wastewater, but if the feed wastewater is properly aerated, hydrogen sulfide should not be present. Increasing the rate of oxygen dissolution into the feed water is therefore important for minimizing H₂S stripping. Further, because N₂O is formed during nitrification and denitrification as precursors to biological reactions, ensuring quick and complete reaction is a key to minimizing N₂O formation. N₂O forms when the dissolved oxygen (DO) level of the wastewater being treated is low or inefficient. It is uneconomical to raise DO significantly (i.e., above 2 mg/L) using an air-based system due to diminished saturation concentrations. For example, the saturation of oxygen in air at 35 °C is 6.9 mg/L. This means that in order to raise the DO level of the wastewater from 0.5 to 2.0 mg/L, the oxygen supply must be increased by about 25% when aerating with air but the Inventors realized that the oxygen supply must be increased only by about 4% when aerating with pure oxygen. The present invention uses pure or nearly pure oxygen (i.e., purity greater than 90%) for aeration in order to increase the oxygen transfer efficiency and therefore the DO level of the wastewater and reduce N₂O formation. Also of note is that if N₂O is formed during denitrification (no oxygen) stages, subsequent aeration of that wastewater during nitrification stages will result in stripping and release of N₂O to the atmosphere. The present invention minimizes this stripping effect.

Additional drawbacks of air-based wastewater treatment systems include foaming due to high gas flows, formation of aerosols in surface-based aeration, process failures during cold winter months as evaporative heat loss drops system temperatures below those that can sustain constant loading rates, and system upsets due to inability to treat periods of highly loaded water entering the system. The present invention addresses these issues, as well as those previously discussed, by increasing DO levels above 2 mg/L without significant additional costs, increasing transfer efficiencies and therefore decreasing gas flow requirements, allowing for faster response to demand ensuring rapid removal of solubilized H₂S, minimizing foaming, reducing effective evaporative cooling, and accommodating higher loading rates of nitrogen removal.

The present invention is directed primarily to methods for treating animal waste, particularly liquid fractions separated from manure, with high purity oxygen to increase the dissolved oxygen content of the wastewater and minimize stripping of volatile gases. In particular, methods for treating animal waste described herein comprise separating animal waste into a liquid fraction and a solid fraction, and aerating at least a portion of the liquid fraction with oxygen having a purity greater than 90% until the dissolved oxygen (DO) level of the liquid fraction is between about 2.0 mg/L and about 9.0 mg/L. In certain embodiments, the animal waste is treated in a central location. In the same or other embodiments, the liquid fraction is aerated in a cyclical manner so that ammonia in the liquid fraction is converted to nitrate aerobically when the liquid fraction is being aerated and nitrate is converted to nitrogen gas anoxically when the liquid fraction is not being aerated. These aerobic (nitrification) and anoxic (denitrification) stages may take place in the same vessel or in separate vessels.

Methods of the present invention for the treatment of animal waste typically comprise separating animal waste (*e.g*. manure) into a solid fraction and a liquid fraction and aerating at least a portion of the liquid fraction with oxygen having a purity greater than about 90% until the dissolved oxygen (DO) level of the liquid fraction is from about 2.0 to about 9.0 mg/L. The solid and liquid fractions may be separated by any appropriate method, such as for example by centrifuge, sieve, dissolved air flotation (DAF), gravity settling, or other methods known in the art. In certain embodiments of the invention, the animal waste is treated in a central location. In these embodiments, animal waste may be shipped, piped, or driven from one or more source locations to the treatment location and waste from those source locations is combined at the treatment location and treated in a single treatment facility.

Wastewater suitable for treatment by the methods of the current invention may comprise all or a portion of the liquid fraction separated from the feed animal waste. While animal waste is referred to as the waste source herein, the methods described herein may be used to treat concentrated wastewater streams such as those coming from anaerobic reactors for biogas and energy production and/or in suspended biomass treatment systems used to treat activated sludge and derivatives thereof, including but not limited to membrane bioreactors (MBR), moving bed biofilm reactors (MBBR), and the like. Such examples of wastewater are referred to collectively herein as "biowaste water". Accordingly, it is to be understood that the following references to "liquid fraction" may be replaced with the more general term "biowaste water".

Preferred waste sources are those in which the liquid fraction (or biowaste water) has a relatively high nitrogen content. Typically, the liquid fraction comprises from about 500 to about 10,000 mg/L total nitrogen, from about 10,000 to about 50,000 mg/L chemical oxygen demand (COD), and/or from about 0 to about 9% dry solids content. In further embodiments of the invention, the liquid fraction comprises from about 1,500 to about 6,000 mg/L total nitrogen, from about 15,000 to about 50,000 mg/L COD, and/or from about 1 to 6% dry solids content.

Once separated from the solid fraction of the waste source, at least a portion of the liquid fraction is typically directed to a biological treatment aeration vessel (which may be any tank, reservoir, basin, *etc*. having a capacity sufficient for the desired treatment operation) and aerated with oxygen having a purity greater than 90%. In some embodiments of the invention, the oxygen has a purity greater than about 91%, greater than about 95%, greater than about 98%, or greater than about 99%. The oxygen may be introduced into the liquid fraction and the liquid fraction aerated by any suitable method known in the art. For example, oxygen may be introduced into the aeration vessel by one or more pipes, jets, nozzles, diffusers, or other methods for providing high purity oxygen into at least a portion of the liquid fraction, and the liquid fraction may be aerated *via* a mixing device such as a venturi mixer, a downflow mixer, a combination thereof, or any other agitation or mixing device known for use in liquid aeration. In certain embodiments of the invention, a downflow mixer that incorporates gas injection may be employed, such as a mixer of the type described in US Application Publication No. 2010/0187701. In the same or other embodiments, a venturi aerator may be employed, in which a submerged pump takes the contents of the aeration vessel and pumps them at elevated pressure through a venturi nozzle where oxygen gas is introduced. This mixture then ejects into the aeration vessel *via* one or more inlets, forming a fine bubble oxygen stream into the vessel. An example of this system is described in GB Patent No. 1 455 567.

The aeration vessel is aerated with oxygen until the dissolved oxygen (DO) level in the vessel reaches a desired level, in this case at least 2 mg/L, *e.g*. from about 2.0 to about 9.0 mg/L. In further embodiments, the desired DO range may be from about 2.5 to about 9.0 mg/L, or from about 3.0 to about 9.0 mg/L, or from about 3.5 to about 9.0 mg/L, or from about 4.0 to about 9.0 mg/L, or from about 4.5 to about 9.0 mg/L, or from about 5.0 to about 9.0 mg/L. This elevated DO level reduces nitrous oxide (N₂O) formation by increasing sludge age and providing conditions under which nitrite oxidizing bacteria can thrive, thereby encouraging complete oxidation in the local bacteria environment and minimizing local areas of low DO stress. Use of high purity oxygen rather than air allows the system to reach DO levels greater than 2 mg/L more quickly and, at DO levels greater than 2 mg/L, requires less capacity and minimizes stripping of hazardous gases without a significant increase in cost. For example, taking into account the differences in oxygen transfer efficiency between air and pure oxygen (13.5% OTE for air vs. 60% OTE for oxygen), a 74% increase in the volume of oxygen supplied from air is required to raise the DO level from 1.0 mg/L to 2.0 mg/L in a given system, while an increase in the volume of pure oxygen of only 3.3% is required to achieve the same DO increase. In effect, the capacity of an air-based system would need to be nearly doubled in order to increase DO from 1.0 mg/L to 2.0 mg/L, while the capacity of a pure oxygen-based system would remain essentially unchanged.

Other conditions within in the aeration vessel may include a mixed liquor suspended solids (MLSS) level from about 5 to about 30 g/L, a volatile content of MLSS from about 60% to about 90%, temperature in the mesophilic range (*i.e*. from about 18 to about 45 °C), an oxidation-reduction potential (ORP) greater than about -150 mV, pH from about 6.8 to about 8.4, and/or a loading rate from about 1 to 12 kg O₂/m³/day. While the methods of the invention employ high purity (>90%) oxygen for aeration, air may also be provided to the aeration vessel in addition to the oxygen. For example, among other uses, air may provide cooling to the system or help to control pH changes. In certain embodiments herein, the oxygen transfer efficiency in the aeration vessel is greater than 50%, or greater than 60%, or greater than 70%, or greater than 80%.

In one or more embodiments, methods of the present invention incorporate DO control to maintain DO at or above a desired level. In such embodiments, the DO level of the liquid fraction is measured and compared against a predetermined desired DO range. If the measured DO falls outside of the desired range, the aeration system (for example, the mixer and/or oxygen supply) is turned on or off, or the intensity adjusted, as necessary to maintain the measured DO within the desired range. This DO control may be achieved manually, or the DO sensor and the oxygen introduction device may be connected and controlled electronically, such as by a programmable logic controller (PLC).

In order to fully treat the liquid waste fraction, both nitrification (aerobic) and denitrification (anaerobic) processes must occur. In some embodiments of the present invention, these processes occur in a single vessel (such as the aeration vessel described above). In single-vessel methods, the liquid fraction is aerated in a cyclical manner so that ammonia in the liquid fraction is converted to nitrate aerobically when aeration is turned on and nitrate is converted to nitrogen gas when aeration is turned off. In certain embodiments herein, the liquid fraction is treated aerobically and anaerobically in the same vessel, and the aeration is cycled on and off in intervals ranging from about 10 minutes to about 60 minutes, or from about 20 to about 50 minutes, or from about 30 to about 50 minutes. The aeration and non-aeration intervals may be of the same length, or may be different depending upon the wastewater characteristics. In one embodiment, the liquid fraction is aerated in equal on/off cycles of 40 minutes, such that the mixer or other oxygen delivery system is turned on for 40 minutes and then off for 40 minutes, and the cycle is repeated as needed. Additionally, or in the alternative, timing of the aeration cycle may be controlled by direct measurement of a variety of parameters such as oxidation-reduction potential (ORP), nitrate or ammonia levels in the basin, or other parameters of interest.

In other embodiments of the invention, nitrification and denitrification may take place in separate vessels. In such embodiments, the liquid fraction is treated anoxically in a first tank to convert nitrate to nitrogen gas without aeration, and the liquid fraction is then transferred to a second tank where it is aerated with oxygen until the dissolved oxygen (DO) level of the liquid fraction reaches a level between about 2.0 mg/L and 9.0 mg/L to convert ammonia to nitrate. Aeration in the second tank is essentially continuous, save for variations in aeration required for DO control as previously described. In some embodiments, at least a portion of the liquid fraction in the nitrification (aeration) vessel may be recycled to the denitrification vessel.

In some aspects of the invention, once the liquid fraction has been aerated, the aerated liquid fraction may be directed to a separator or other similar device (such as, for example, a clarifier or gravity separator) to separate the aerated liquid into a water fraction and a biomass fraction. The biomass fraction is removed and may be disposed of or further processed. Optionally, a portion of the biomass fraction may be recycled and fed to the denitrification part of the process. In certain embodiments, the final effluent (*i.e*. the water fraction of the aerated liquid) comprises less than 10% of the total nitrogen-containing compounds present in the feed liquid fraction prior to treatment. In the same or other embodiments, the chemical oxygen demand (COD) of the final effluent is less than 20% of the COD of the feed liquid fraction prior to treatment.

Having described various aspects of the methods herein, further specific embodiments of the invention include those set forth in the following lettered paragraphs:
A. A method for the treatment of animal waste comprising separating animal waste into a liquid fraction and a solid fraction, and aerating at least a portion of the liquid fraction with oxygen until the dissolved oxygen (DO) level of the liquid fraction reaches a level between about 2.0 mg/L and 9.0 mg/L, wherein the oxygen has a purity greater than 90%.
B. The method of paragraph A, wherein the oxygen has a purity greater than 95%.
C. The method of any of paragraphs A through B, wherein the at least a portion of the liquid fraction is aerated by introducing oxygen into the liquid fraction *via* an aeration device.
D. The method of any of paragraphs A through C, further comprising the steps of: determining a desired dissolved oxygen (DO) range of the liquid fraction; measuring the DO level of the liquid fraction; comparing the measured DO to the desired DO range; and controlling the DO level by turning the aeration device on or off or varying the speed of the aeration device as necessary to maintain the DO level within the desired range.
E. The method of paragraph D, wherein the aeration device comprises a venturi mixer, a downflow mixer, or a combination of thereof.
F. The method of any of paragraphs A through E, wherein the liquid fraction is aerated in a cyclical manner so that ammonia in the liquid fraction is converted to nitrate aerobically when the liquid fraction is being aerated and nitrate is converted to nitrogen gas anoxically when the liquid fraction is not being aerated.
G. The method of paragraph F, wherein the aeration is cycled on and off in intervals ranging from 10 to 60 minutes.
H. The method of any of paragraphs F through G, wherein the aeration is cycled on and off in intervals determined by *in situ* measurement of one or more parameters selected from ammonia content, nitrate content, and oxidation-reduction potential.
I. The method of any of paragraphs A through H, wherein the liquid fraction is treated anoxically in a first tank to convert nitrate to nitrogen gas without aeration, and the liquid fraction is then transferred to a second tank where it is aerated with oxygen until the dissolved oxygen (DO) level of the liquid fraction reaches a level between about 2.0 mg/L and 9.0 mg/L to convert ammonia to nitrate.
J. The method of paragraph I, further comprising the step of recycling at least a portion of the aerated liquid fraction from the second tank to the first tank.
K. The method of any of paragraphs A through J, wherein the oxygen transfer efficiency is greater than 50%.
L. The method of any of paragraphs A through K, wherein the oxygen transfer efficiency is greater than 60%.
M. The method of any of paragraphs A through L, wherein the oxygen transfer efficiency is greater than 80%.
N. The method of any of paragraphs A through M, further comprising the step of transferring the aerated liquid fraction to a separator and separating the aerated liquid into a water fraction and a biomass fraction.
O. The method of paragraph N, wherein the water fraction comprises less than 10% of the total nitrogen-containing compounds present in the liquid fraction prior to aeration.
P. The method of any of paragraphs N through O, wherein the chemical oxygen demand (COD) of the water fraction is less than 20% of the COD of the liquid fraction prior to aeration.
Q. The method of any of paragraphs A through P, wherein the animal waste is treated in a central location.

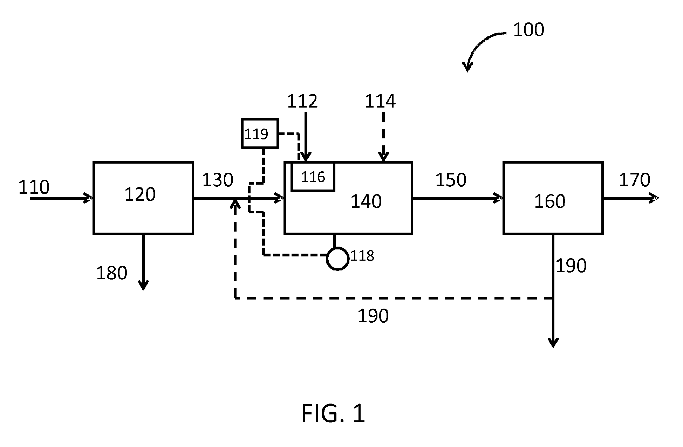

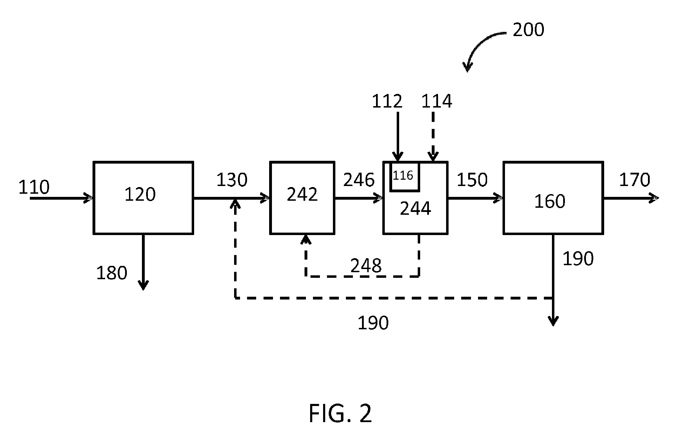

The methods of the invention may be further understood with reference to Figures 1 and 2 and the examples and related descriptions thereof that follow. In the figures:
Figure 1 is a schematic diagram of an embodiment of the invention in which nitrification and denitrification take place in a single tank; and
Figure 2 is a schematic diagram of an embodiment of the invention in which nitrification and denitrification take place in two separate tanks.

It should be noted that the figures are simplified flow diagrams and, in some instances, do not show various pieces of auxiliary equipment, such as pumps, compressors, valves, sensors, controllers, and the like. Because one having ordinary skill in the art would recognize the need for and location of such auxiliary equipment, its omission is appropriate and facilitates the simplification of the figures. Fluid streams and equipment or operations common to more than one figure or embodiment are identified by the same reference numerals in each figure. In the interest of clarity, some of these shared features that are described with respect to the figure in which they first appear are numbered in subsequent figures but those descriptions are not repeated in the specification.

Figure 1 depicts an exemplary method according to the present invention in which nitrification and denitrification take place in a single vessel. In the process 100 represented in Figure 1, animal manure or other waste 110 is fed to a separator 120, where the feed waste is separated into a solid or thick fraction 180 and a liquid or thin fraction 130. The feed waste 110 may come from a single source, or may be combined from two or more sources and treated in system 100 at a central location. In this example, the feed waste 110 is pig manure combined from several farms in a region, and comprises about 7,000 mg/L total nitrogen compounds and about 4,500 mg/L total phosphorus compounds. The feed waste 110 is fed to the process at a rate of about 80 to about 100 m³/day in the present example. Also in the present example, feed waste 110 is separated in separator 120 by centrifuge, and about 85% of the total feed flow is separated as the liquid fraction 130 while the remaining 15% of the total feed flow forms solid fraction 180. The solid fraction 180 comprises about 20% of the nitrogen compounds in the feed, about 70% of the total phosphorus compounds in the feed, and about 50% of the dry solids in the feed. The solid fraction 180 may be disposed of or directed to another facility for further processing. The liquid fraction is high in ammonia and COD, and comprises about 80% of the total nitrogen compounds in the feed, about 30% of the total phosphorus compounds in the feed, and about 50% of the dry solids in the feed. Typical in-solution values are about 6,000 mg/L N, 1,500 mg/L P, and about 30,000 mg/L COD. The liquid fraction 130 is then fed to an aeration vessel 140, where it is aerated in a cyclical manner to allow for both nitrification (aerobic) and denitrification (anaerobic) cycles to take place.

In the present example, aeration vessel 140 is a biological treatment tank having a volume of about 3,400 m³. The liquid fraction 130 in aeration vessel 140 is aerated with high purity oxygen 112 in on/off cycles of approximately 40 minutes. Optionally, air 114 may also be supplied to the vessel 140 to provide additional aeration, such as by a suction aerator (not shown) in which air is drawn in from the atmosphere and dispelled into the liquid fraction radially in the form of bubbles. Oxygen 112 is supplied to the aeration vessel 140 *via* an oxygenation device 116. In this case, the oxygenation device 116 is a high shear oxygen dissolution device incorporating a submerged pump that draws in the contents of the vessel 140 and pumps them through a venturi device where oxygen 112 is introduced. The resulting oxygen/liquid mixture is then ejected at elevated pressure into the vessel *via* nozzles (not shown), forming a fine stream of oxygen bubbles into the vessel 140. The oxygenation device 116 is located near the feed inlet in order to supply the highest oxygen demand as quickly as possible to the process.

The system depicted in Figure 1 incorporates optional DO control. The DO level of the liquid within the aeration vessel 140 is measured by DO sensor 118. The measured DO value is then transmitted to optional programmable logic controller (PLC) 119, where it is compared to a predetermined desired DO range. If the measured DO value falls outside the preset DO range, the PLC 119 adjusts the oxygenation device 116 accordingly (*i.e*. by increasing or decreasing the rate of the device, or by turning the device or oxygen supply to the device on or off) until the measured DO reaches the desired DO range. Such optional DO control may also be accomplished manually without the use of PLC 119.

Aeration within the aeration vessel is timed to switch between two biological processes: aerobic (with oxygen 112 and optional air 114 feeds turned on) in which ammonia is converted to nitrate and some of the COD is converted to CO₂ and water; and anoxic (with oxygen 112 and optional air 114 feeds turned off) in which nitrate is converted to nitrogen gas and additional COD is converted to CO₂ and water. Once adequately treated, the aerated liquid fraction 150 is passed to a second separator 160 where treated water 170 is separated from the biomass fraction 190. In the present example, separator 160 is a clarifier/gravity separator. Optionally, as shown in Figure 1, a fraction of the biomass fraction 190 may be recycled and returned to the process.

Referring now to Figure 2, a method according to the present invention is exemplified in which nitrification and denitrification take place in separate vessels. In the process 200 depicted in Figure 2, the features that are the same as in Figure 1 have been labeled with the same reference numerals. In process 200, the liquid fraction 130 is first fed to a denitrification vessel 242, where an anoxic biological reaction takes place as described above. The denitrified liquid fraction 246 is then transferred from the denitrification vessel 242 to a nitrification (aeration) vessel 244, where the liquid fraction is aerated with oxygen 112 and, optionally, air 114 and an aerobic biological reaction takes place as described above. The denitrified liquid fraction 246 is aerated in vessel 244 to reach a DO level from about 2.0 to about 9.0 mg/L. In the process 200 of Figure 2, oxygen 112 is supplied continuously as demand requires rather than cyclically as in the single tank example of Figure 1. The aerated liquid fraction 150 is then passed to second separator 160 and further processed as previously described. A portion of the aerated liquid fraction 248 is recycled from the nitrification vessel 244 to the denitrification vessel 242, providing nitrate for the denitrification stage.

### Example

Benefits of the methods described herein may be further understood with reference to the following example, which demonstrates that high transfer efficiencies and low gas flow requirements reduce dissolved gas stripping to a minimum. Assuming a basin having a depth of 4.5 m, requiring 1 m³ of dissolved oxygen and having an α value (where α is the relationship of the efficiency in clean water to the efficiency in process systems) of 0.5, 35.4 m³ of air is required to provide the desired oxygenation, of which 34.4 m³ is wasted (*i.e*., not dissolved). In contrast, using the same assumptions and an oxygen transfer efficiency (OTE) of 60%, only 1.67 m³ of pure (100%) oxygen is required to provide the desired oxygenation, of which 0.67 m³ is wasted (*i.e*. not dissolved). Thus, the wasted pure oxygen volume is less than 2% of the wasted air volume, meaning that switching to pure oxygen reduces the gas stripping effect by at least 98%. Using the same calculations at an OTE of 90%, the gas stripping effect is reduced by 99.7%.

Benefits of employing methods according to the present invention include reduction in stripped N₂O and other harmful gases, reduction in total nitrogen compounds, reduction in COD, quicker response to demand, and reduction of foaming issues allowing for aeration for longer periods of time. For example, stripped N₂O released to the atmosphere is reduced by at least 80%, or at least 85%, or at least 90%, or at least 95%, or at least 98%, or at least 99%. Similar reductions in other stripped gases such as H₂S and NH₃ are also achieved. Further, total nitrogen compounds in the effluent water fraction are reduced by at least 80%, or at least 85%, or at least 90%, or at least 95%. Put another way, the effluent water fraction comprises less than 20%, or less than 15%, or less than 10%, or less than 5% of the total nitrogen compounds present in the liquid animal waste prior to treatment. Similarly, the COD of the effluent water fraction is less than 25%, or less than 20%, or less than 15%, or less than 10% of the COD of the liquid animal waste prior to treatment.

While the methods herein have been largely described with reference to treatment of animal manure, the methods may be similarly applied to treat other liquid waste sources as well and may be used in combination with other liquid waste treatment systems. For example, the methods of the present invention may be employed in suspended biomass systems such as typically used in activated sludge treatment and derivatives thereof including, but not limited to, membrane bioreactor (MBR) systems, moving bed biofilm reactor (MBBR) systems, and the like, or for treating any concentrated wastewater streams such as those coming from anaerobic reactors for biogas and energy production.

Various terms have been defined above. To the extent a term used in a claim is not defined above, it should be given the broadest definition persons in the pertinent art have given that term as reflected in at least one printed publication or issued patent. Furthermore, all patents, test procedures, and other publications or documents cited in this application are fully incorporated by reference to the extent such disclosure is not inconsistent with this application for all jurisdictions in which such incorporation is permitted.

Certain embodiments and features of the invention have been described using a set of numerical upper limits and a set of numerical lower limits. For the sake of brevity, only certain ranges are explicitly disclosed herein. However, it should be appreciated that ranges from any lower limit to any upper limit are contemplated unless otherwise indicated. Similarly, ranges from any lower limit may be combined with any other lower limit to recite a range not explicitly recited, and ranges from any upper limit may be combined with any other upper limit to recite a range not explicitly recited. Further, a range includes every point or individual value between its end points even though not explicitly recited. Thus, every point or individual value may serve as its own lower or upper limit combined with any other point or individual value or any other lower or upper limit, to recite a range not explicitly recited. All numerical values are "about" or "approximately" the indicated value, and take into account experimental error and variations that would be expected by a person having ordinary skill in the art.

While the foregoing is directed to embodiments of the invention and alternate embodiments thereof, various changes, modifications, and alterations from the invention may be contemplated by those skilled in the art without departing from the intended spirit and scope thereof. It is intended that the present invention only be limited by the terms of the appended claims.

## Claims

1. A method of treating biowaste water, said method comprising aerating the biowaste water with oxygen until the dissolved oxygen (DO) level of the biowaste water is increased to at least 2 mg/L and preferably to no more than 9 mg/L; wherein the oxygen has a purity greater than 90%, and preferably greater than 95%.

2. A method as claimed in Claim 1, wherein the biowaste water is aerated by introducing the oxygen into the biowaste water *via* an aeration device.

3. A method as claimed in Claim 2, further comprising the steps of:
determining a desired DO range of the biowaste water;
measuring the DO level of the biowaste water;
comparing the measured DO level to the desired DO range; and
controlling the DO level by turning the aeration device on or off or varying the speed of the aeration device as necessary to maintain the DO level within the desired range.

4. A method as claimed in Claim 2 or Claim 3, wherein the aeration device comprises a venturi mixer, a downflow mixer, or a combination of thereof.

5. A method as claimed in any of the preceding claims, wherein the biowaste water is aerated in a cyclical manner so that ammonia in the biowaste water is converted aerobically to nitrate when the biowaste water is being aerated, and nitrate is converted anoxically to nitrogen gas when the biowaste water is not being aerated.

6. A method as claimed in Claim 5, wherein the aeration is cycled on and off in intervals ranging from 10 to 60 minutes.

7. A method as claimed in Claim 5 or Claim 6, wherein the aeration is cycled on and off in intervals determined by *in situ* measurement of one or more parameters selected from ammonia content; nitrate content; and oxidation-reduction potential.

8. A method as claimed in any of the preceding claims, wherein the biowaste water is treated anoxically in a first tank to convert nitrate to nitrogen gas without aeration, and the biowaste water is then transferred to a second tank where it is aerated with oxygen until the DO level of the biowaste water reaches a level in the range from 2 mg/L to 9 mg/L to convert ammonia to nitrate.

9. A method as claimed in Claim 8, further comprising the step of recycling at least a portion of the aerated biowaste water from the second tank to the first tank.

10. A method as claimed in any of the preceding claims, wherein the oxygen transfer efficiency is greater than 50%, preferably greater than 60%, and more preferably greater than 80%.

11. A method as claimed in any of the preceding claims, further comprising the step of transferring the aerated biowaste water to a separator and separating the aerated biowaste water into a water fraction and a biomass fraction.

12. A method as claimed in Claim 11, wherein the water fraction comprises less than 10% of the total nitrogen-containing compounds present in the biowaste water prior to aeration.

13. A method as claimed in Claim 11 or Claim 12, wherein the chemical oxygen demand (COD) of the water fraction is less than 20% of the COD of the biowaste water prior to aeration.

14. A method as claimed in any of the preceding claims, wherein the biowaste water is at least a portion of a liquid fraction of animal waste, said method comprising separating animal waste into the liquid fraction and a solid fraction prior to aeration.

15. A method as claimed in Claim 14, wherein the animal waste is treated in a central location.
